# EUROPEAN PATENT APPLICATION

(11) **EP 2 187 291 A1**
(43) Date of publication of application: **19.05.2010**
(21) Application number: 07806769.1
(22) Date of filing: 05.09.2007
(51) Int. Cl.: G06F 3/041, G06F 3/048

(54) **PORTABLE TERMINAL DEVICE AND DISPLAY CONTROL METHOD**

(71) Applicant: Panasonic Corporation, Kadoma-shi Osaka 571-8501 (JP)
(72) Inventor: SAKATSUME, Toshihiro, Osaka-shi, Osaka 540-6207 (JP)
(74) Representative: Grünecker, Kinkeldey, Stockmair & Schwanhäusser Anwaltssozietät
(86) International application number: PCT/JP2007/067327
(87) International publication number: WO 2009/031214

(57) **Abstract**

The present invention aims at providing a portable terminal device that can be held in one hand and that enables enhancement of operability when a touch panel or a touch pad is operated by the hand. The portable terminal device according to the present invention includes a display section 11 for displaying various information thereon, a touch pad 12 that detects a pressed area, and a control unit 16 that controls a display position of information to be displayed on the display section 11, according to the pressed area where the touch pad 12 has detected the press.

## Description

### Technical Field

The present invention relates to a portable terminal device equipped with a touch panel or a touch pad, and more particularly, to a portable terminal device for enhancing operability of the touch panel by a device user.

### Background Art

Some portable terminal devices typified by portable cellular phones and PDAs (Personal Digital Assistants) are equipped with touch panels and touch pads. The touch panel referred to herein designates a device built from any of various types of sensors (e.g., a capacitive type, a resistance film type, and an infrared ray shielding type) for detecting a position pressed by the device user and a display positioned on a lower side of the sensor. The touch pad designates a pointing device that includes the sensor and that is not limited in connection with a positional relationship with the display. The portable terminal device equipped with the touch panel or the touch pad can provide the device user with intuitive operation.

Patent Document 1, for instance, describes a portable terminal device that enables holding of the device in one hand and also enables operation of a touch pad by means of the same hand.
Patent Document 1: JP-T-2000-515702

### Disclosure of the Invention

### Problem that the invention is to Solve

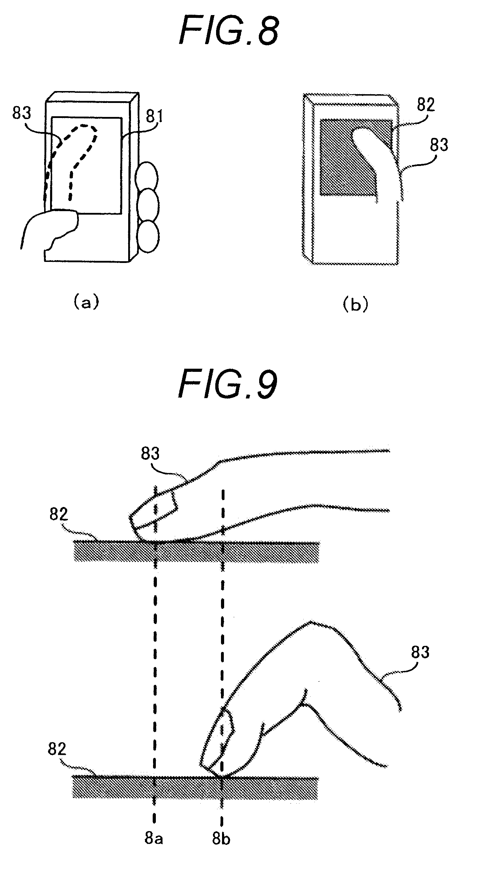

In Fig. 8, (a) shows a front view of the portable terminal device described in connection with Patent Document 1, and (b) shows a rear view of the same. In the portable terminal device described in connection with Patent Document 1, a display 81 is provided on one side of the portable terminal device, and a touch pad 82 is provided on the back side of the same. The side provided with the display 81 is herein taken as a front side, whilst the other side provided with the touch pad 82 is taken as a rear side. In Fig. 8, the device user holds the portable terminal device in his/her left hand and brings a leading end of a forefinger 83 into contact with the touch pad 82, thereby performing operation.
When the leading end of the hand is brought into contact with the touch pad while the portable terminal device is held in the same hand as shown in Figs. 8, operability of the touch pad is deteriorated in a case illustrated in a lower position in Fig. 9.

Specifically, when the leading end of the forefinger 83 is brought into contact with a position (a position denoted by a chain line 8a) on the touch pad 82 spaced apart from the base of the forefinger 83 as shown in an upper position in Fig. 9, the device user can perform operation in a comfortable position without much bending the forefinger 83. On the contrary, as shown in the lower position in Fig. 9, when the leading end of the forefinger 83 is brought into contact with a position (a position denoted by a chain line 8b) on the touch pad 82 close to the base of the forefinger 83, the device user must much bend the forefinger 83 and is forced to perform operation in an uncomfortable position.
In order to perform operation at the position denoted by the dotted line 8b in the comfortable position, the device user must hold the portable terminal device in another way. In view of operability, however, it is not preferable to let the device user hold the portable terminal device in another way every time the touch pad 82 is operated.

The present invention has been conceived in light of the circumstance and aims at providing a portable terminal device and a display control method that make it possible to enhance operability of the unit when the unit is held in one hand and when a touch panel or a touch pad is operated by the same hand.

### Means for Solving the Problem

A portable terminal device according to the present invention includes : a display section for displaying various information thereon; a press detection section that is adapted to detect a press; and a control unit that is adapted to control a display position of a display target whose display position on the display section is previously stationarily set, according to a pressed area where the press detection section has detected the press.

A display control method according to the present invention includes: detecting a pressed area; controlling a display position of a display target whose display position is previously stationarily set, according to the pressed area where a press is detected; and displaying the display target whose display position is controlled.

The configuration makes it possible to control display contents to be indicated on a display section in accordance with a pressed area detected by a press detection section (a touch pad). Therefore, there can be provided an optimum interface appropriate for operation of a device user detected by the press detection section.

The portable terminal device according to the present invention includes a configuration, wherein the control unit has: a straight line calculation section that is adapted to calculate a straight line that passes through at least one point in the pressed area where the press detection section has detected the press and that has an inclination along a longitudinal direction of the pressed area; a position calculation section that is adapted to calculate an average position of intersections when intersections of a plurality of straight lines calculated for the respective pressed areas by the straight line calculation section fall within a predetermined range; and a display control unit that is adapted to control the display position of the display target according to the average position.

The position of the base of a finger that is now used for operating the press detection section (the touch pad) can be localized by the configuration. The user interface reflecting the position of the base consequently makes it possible to enhance operability achieved when the portable terminal device is held in one hand and when the touch panel or the touch pad is operated by the same hand.

The portable terminal device according to the present invention includes a configuration, wherein the straight line calculation section calculates a major axis of the pressed area analogous to an ellipse as the straight line.

The configuration enables accurate localization of the position of the base of the finger.

The portable terminal device according to the present invention includes a configuration, wherein the display control unit controls a display position of an image serving as the display target to be displayed on the display section, according to the average position.

By virtue of the configuration, the device user becomes unnecessary to perform operation by much bending a finger used for operating a touch pad and hence able to conduct operation comfortably.

The portable terminal device according to the present invention includes a configuration, wherein the display control unit controls a range pointed by a pointer displayed on the display section according to the average position.

By virtue of the configuration, there can be provided an operation environment that makes it easy to designate a target appearing on the display section even when a leading end of the finger is brought into contact with a position on the touch pad proximity to the base of the finger.

### Advantageous Effect of the Invention

The portable terminal device and the display control method of the present invention enable enhancement of operability when a portable terminal device is held in one hand and when a touch panel or a touch pad is operated by the same hand.

### Brief Description of the Drawings

Fig. 1 is a block diagram of a portable terminal device of an embodiment of the present invention.
Fig. 2 is a flowchart along which the portable terminal device of the embodiment of the present invention performs processing.
Fig. 3 shows plots for describing major axis calculation processing performed by the portable terminal device of the embodiment of the present invention.
Fig. 4 shows plots for describing base position localization processing performed by the portable terminal device of the embodiment of the present invention.
Fig. 5 shows characteristics of contact surfaces of fingers yielded during operation of a touch panel.
Fig. 6 shows a relationship between an exemplary display on the portable terminal device of a first example of the present invention and a position of the base achieved during the display.
Fig. 7 shows a relationship between an exemplary display on the portable terminal device of a second example of the present invention and a position of the base achieved during the display.
In Fig. 8, (a) is a front view (a) of a portable terminal device of Patent Document 1, and (b) is a rear view (b) of the portable terminal device.
Fig. 9 shows positions of a finger achieved during operation of a touch pad on the portable terminal device of Patent Document 1.

### Descriptions of the Reference Numerals and Symbols

- 11: DISPLAY SECTION
- 12: TOUCH PAD
- 13: OPERATION KEYS
- 14: EXECUTION PROGRAM STORAGE SECTION
- 15: OPERATION INFORMATION STORAGE SECTION
- 16: CONTROL UNIT
- 51,: 52 CONTACT SURFACE
- 53: POSITION OF BASE OF FINGER
- 71: POSITION DESIGNATION POINTER
- 72: RANGE DESIGNATION POINTER
- 73: WINDOW
- 81: DISPLAY SECTION
- 82: TOUCH PAD
- 83: FOREFINGER

### Best Mode for Implementing the Invention

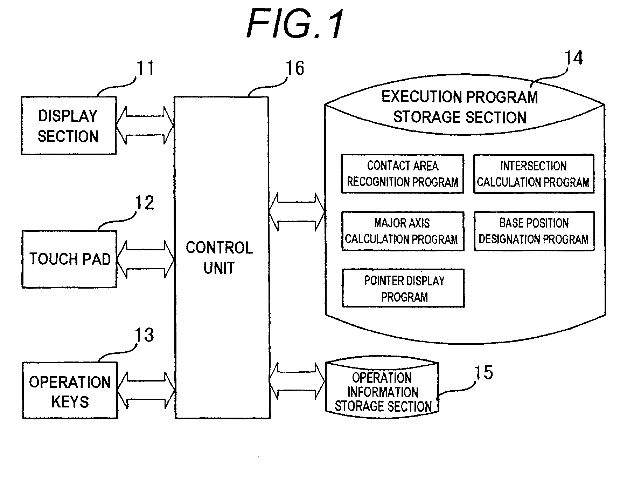

A portable terminal device according to an embodiment of the present invention is hereunder described. The configuration of the portable terminal device according to the embodiment of the present invention is first described by reference to a block diagram of the portable terminal device of the embodiment shown in Fig. 1. A portable terminal device according to the embodiment of the present invention includes a display section 11; a touch pad 12; operation keys 13; an execution program storage section 14; an operation information storage section 15; and a control unit 16. The display section 11 is made up of a liquid crystal display or an organic EL display and displays various types of information in accordance with a control signal output from the control unit 16. The touch pad 12 includes a sensor of each of various types (e.g., a capacitive type, a resistance film, or an infrared ray insulating type) that detects a position pressed by the device user and outputs a signal detected by the sensor to the control unit 16. The operation keys 13 include, for instance, keys assigned 0 to 9 numbers or specific functions. The operation keys 13 accept an input signal from a device user and outputs the thus-accepted signal to the control unit 16. The execution program storage section 14 stores various programs to be executed by the control unit 16. The operation information storage section 15 stores data output as a result of the program being executed by the control unit 16.

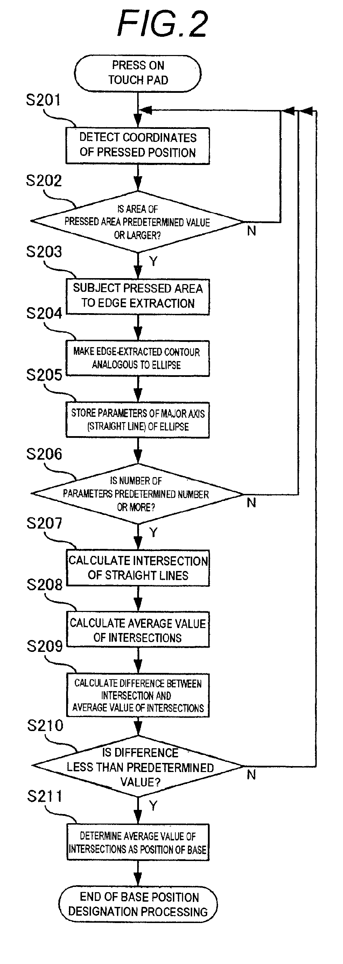

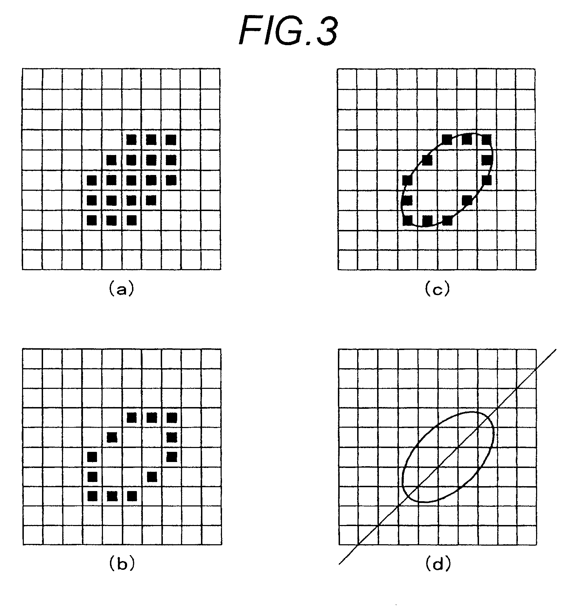

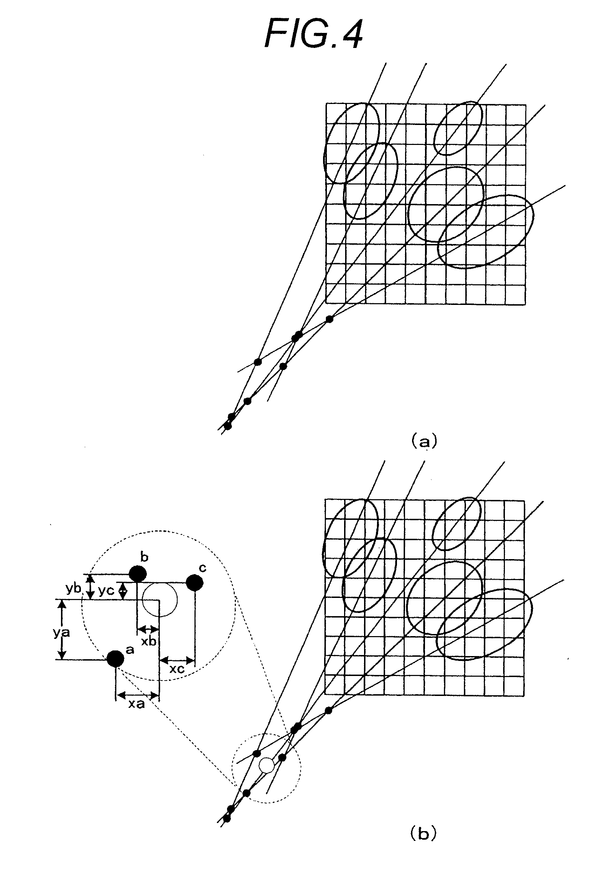

Flow and specifics of respective processing operations performed by the portable terminal device according to an embodiment of the present invention are now described. Fig. 2 shows a flowchart along which the portable terminal device according to the embodiment of the present invention performs processing. Fig. 3 shows plots for describing major axis calculation processing performed by the portable terminal device according to the embodiment of the present invention. Fig. 4 shows plots for describing base position localization processing performed by the portable terminal device according to the embodiment of the present invention.

First, when the device user operates the touch pad 12 by bringing the leading end of a finger into contact with the touch pad 12, the touch pad 12 outputs to the control unit 16 signals showing pressed positions on the touch pad 12 (step S201). For instance, when the touch pad 12 is of capacitive type and includes capacitors arranged in a matrix pattern, signals output from a capacitor placed at the pressed positions is lower in voltage than signals output from a capacitor arranged at unpressed positions. Therefore, the control unit 16 can localize coordinates of the pressed position on the touch pad 12 (coordinates of pressed positions shown in (a) of Fig. 3 correspond to solid cells in the matrix, and an aggregate of the cells is hereinafter called a "pressed area") from the voltage values of the signals output from the touch pad 12.

The control unit 16 subsequently executes a contact area recognition program stored in the execution program storage section 14, thereby determining whether or not an area of the pressed area; namely, a total number of cells constituting the pressed area, is larger than a predetermined value (step S202). When the area of the pressed area is larger than a predetermined value (Y in step S202), the control unit 16 executes a long-axis calculation program stored in the execution program storage section 14, thereby performing processing to be described later. Meanwhile, when the area of the pressed area is smaller than the predetermined value (N in step S202), the control unit 16 does not perform processing to be described later and waits for a signal output from the touch pad 12.

When the area of the pressed area is larger than the predetermined value, the control unit 16 subjects the pressed area to edge extraction processing (step S203). The control unit 16 recognizes coordinates of a contour of the thus-edge-extracted pressed area (coordinates of a contour of the pressed area shown in (b) of Fig. 3 correspond to solid cells in the matrix). Further, the control unit 16 performs elliptical approximate processing by use of the coordinates of the contour of the pressed area extracted through edge extraction processing (step S204, where an ellipse shown in (c) of Fig. 3 corresponds to an ellipse calculated by means of ellipse approximate processing). Ellipse approximate processing adopts; for instance, a least square method. The control unit 16 calculates a straight line including as a portion a major axis of the thus-calculated ellipse equation (corresponding to a straight line shown in (d) of Fig. 3), and parameters representing a linear equation for the straight line are stored in the operation information storage section 15 (step S205). The control unit 16 subsequently performs processing every time a signal is input from the touch pad 12.

When the device user operates the touch pad 12 a number of times by bringing the leading end of the finger into contact with the touch pad 12 whereby the control unit 16 stores a predetermined number of parameters in the operation information storage section 15 (Y in step S206), the control unit 16 executes an intersection calculation program stored in the execution program storage section 14, thereby calculating coordinates of intersections of respective straight lines and other straight lines (step S207). In Fig. 4, (a) shows a case where coordinates of intersections of respective straight line and other straight lines are calculated at a point in time when five parameters are stored, and the intersections are depicted in "•" (a solid).

The control unit 16 subsequently executes a base position localization program stored in the execution program storage section 14, thereby calculating an average value of the thus-calculated coordinates of the plurality of intersections (step S208). In Fig. 4, (b) shows an average value of the coordinates of the intersections by means of a "○" (a solid). The control unit 16 calculates a difference between coordinates of each of the intersections and the average value of the coordinates of the intersections, from a difference between coordinates of each of the intersections (designated by "•" shown in (b) of Fig. 4) and the average value of the coordinates of the intersections ("O" shown in (b) of Fig. 4) (step S209). An exemplary technique for calculating a difference is described by reference to (b) of Fig. 4. A mathematical equation f(x) = xa² + xb² + xc² + ... for deriving difference as numerals is calculated from differences between coordinates of the respective intersections and an average value of the coordinates of the intersections achieved in the direction of the X axis (xa, xb, xc, ..., in (b) of Fig. 4). A mathematical equation g(y) = ya² + yb² + yc² + ... for deriving difference as numerals is calculated from differences between coordinates of the respective intersections and an average value of the coordinates of the intersections achieved in the direction of the Y axis (ya, yb, yc, ... , in (b) of Fig. 4). When the respective numerals of the two mathematical expressions f(x) and g(y) representing differences are smaller than respective predetermined values (Y in S210), the control unit 16 recognizes the average value of the coordinates of the intersections as the position of a base on the assumption that the base of the finger touched the touch pad 12 is situated at a position represented by the average value of the coordinates of the intersections (step S211).

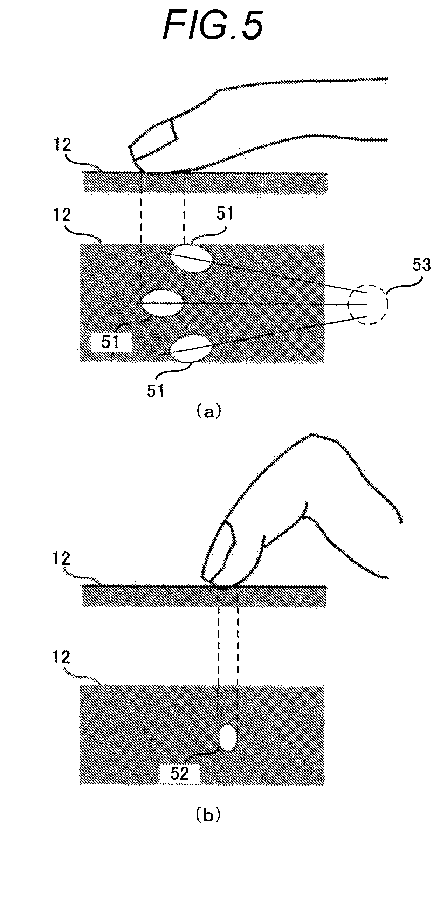

The portable terminal device according to the embodiment of the present invention performs foregoing processing, thereby recognizing the position of the base of the finger used for operating the touch panel 12. On occasion of calculation of the base of the finger, an attention is paid to the following points in connection with foregoing processing. Specifically, there are three points. Namely, a first point is that a contact area of the finger achieved during operation of the touch pad is elliptical; a second point is that, when a leading end of a finger is brought into contact with a position spaced apart from the base of the finger during operation of the touch pad, the base is situated at an extension of the major axis of the ellipse; and a third point is that, even when a position on the touch pad where the ellipse is situated has changed, the major axes of the ellipses will concentrate at the position of the base of the finger unless the portable terminal device is held in another way. Fig. 5 shows a characteristic of the contact surface of the finger achieved during operation of the touch panel.

As shown in (a) of Fig. 5 and (b) of Fig. 5, contact surfaces 51 and 52 of the fingers on the touch pad 12 become close to an elliptical shape even when the leading end of the finger is brought into contact with a position spaced apart from the base of the finger during operation of the touch pad and when the leading end of the finger is brought into contact with a position close to the base of the finger. Incidentally, when the leading end of the finger is brought into contact with a position spaced apart from the base of the finger, the area of the contact surface 51 of the finger becomes greater as compared with a case where the leading end of the finger is brought into contact with a position close to the base of the finger. In step S202 pertaining to foregoing processing, it is determined, by utilization of the characteristic, whether a pressed position is distant from or close to the base of the finger, by means of the size of the pressed area. A threshold value used for determining the size of the pressed area can be set as; for instance, an average value for the pressed areas that have been calculated thus far.

When the leading end of the finger is brought into contact with the position spaced apart from the base of the finger, the direction of the base of the finger is localized on the basis of the major axis of the ellipse analogous to the pressed area having a comparatively large area, by utilization of the fact that the base of the finger is situated at an extension of the major axis of the ellipse. A position 53 of the base of the finger is localized on the basis of an intersection of the major axis and a major axis of the ellipse analogous to another pressed area. An intersection can also be calculated from a plurality of new parameters among stored parameters in step S207, in consideration of occurrence of a change in the position of the base of the finger that will be caused when the device user holds the portable terminal device in another way. Even when the position of the base of the finger is changed as a result of the device user holding the portable terminal device again, it is possible to localize the position so as to follow the change.

User interfaces, such as those mentioned in connection with examples to be described later, are implemented by utilization of the thus-calculated position of the base of the finger. As a result, when the portable terminal device is held in one hand and when the touch panel or the touch pad is operated by means of that hand, it is thereby possible to enhance operability. Exemplary user interfaces utilizing the position of the base of the finger operating the touch panel are hereunder described.

### First Example

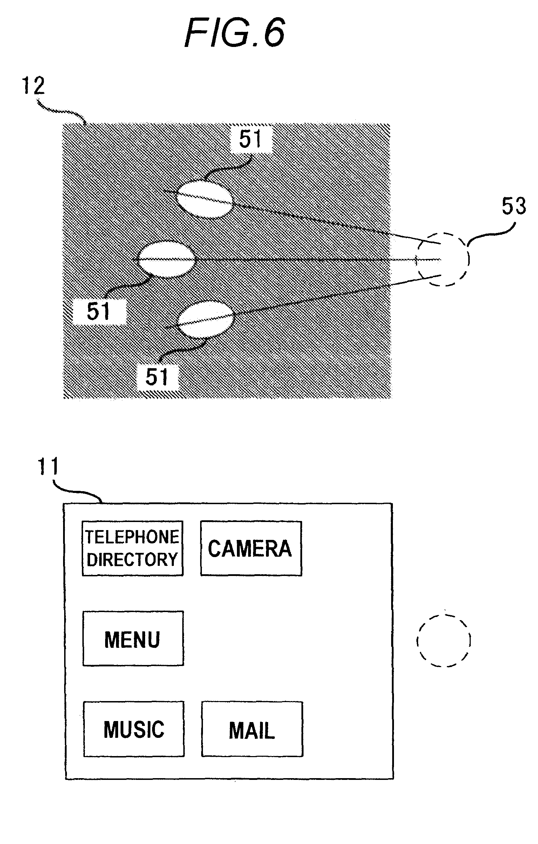

In a first example, a portable terminal device according to the embodiment of the present invention changes contents to be displayed on the display section 11 according to the localized position of the base of the finger. Some user interfaces installed in recent portable terminal devices utilize icons or launcher menus that let users recognize functions in a visual manner and accept a command for executing the function by means of simple operation. Fig. 6 shows a relationship between an exemplary display and the position of the base achieved during display in the portable terminal device of the first example of the present invention.

As shown in Fig. 6, icons or launcher menus, such as a telephone directory, a camera, a menu, music, and a mail, are displayed at positions spaced predetermined distances away from the localized position 53 of the base of the finger. The device user thereby do not become necessary to perform operation by much bending the finger used for operating the touch pad 12, so that the user can perform operation comfortably.

The execution program storage section 14 in the portable terminal device of the first example specifically stores programs for various functions (a telephone directory, a camera, music, a mail, and the like) and icons for commanding execution of the functions while holding them in correspondence with each other.

Each of the icons associated with the respective functions memorizes initial layout information (e.g., the 20th pixel in the direction of the X axis and the 100th pixel in the direction of the Y axis achieved while the upper left corner of the display section 11 is taken as a reference) and an image size that are used for providing a display on the display section 11 when the touch pad is not operated with a menu display.

When the touch pad 12 is operated while a plurality of icons corresponding to various functions are being displayed on the display section 11 in the form of a menu pursuant to the initial layout information, the control unit 16 recognizes the position of the base of the finger of the device user by use of the calculation method.

The control unit 16 determines whether or not there are icons included in a given range centered on the position of the base, on the basis of the initial layout information on the plurality of icons and the range.
When there are not icons included in the range, the control unit 16 displays a plurality of icons on the display section 11 pursuant to the initial layout information.

In the meantime, when there are icons falling within the range, the control unit 16 displays the icons so as not to be included in the given range centered on the position of the base; for instance, relocates and displays all of the icons or specific icons to and at positions spaced apart from positions designated by the initial layout information by predetermined distances or scales down icon images. A necessity for performing operation by much bending the finger used for operating the touch pad 12 becomes thereby obviated, so that operation can comfortably be performed.

Alternatively, a screen that does not require operation (e.g., a TV broadcast screen for the case of a portable terminal device capable of receiving a TV broadcast, music information on audio data being currently reproduced for the case of a portable terminal device capable of reproducing audio data, and the like) can also be displayed in the neighborhood of the localized position 53 of the base of the finger.

Specifically, programs of various functions (a TV broadcast, an audio, and the like) including screens that do not require operation (hereinafter called "operation-free screens") are first stored in the execution program storage section 14 in the portable terminal device of the first example. In relation to display of the operation-free screens of the various functions, there are stored initial layout information and an image size used for providing a display on the display section 11 when the touch pad is not operated (e.g., the 20th pixel in the direction of the X axis and the 100th pixel in the direction of the Y axis achieved while the upper left corner of the display section 11 is taken as a base point).

When the touch pad 12 is operated while the display section 11 is displaying various functions, the control unit 16 ascertains the position of the base of the finger of the device user by use of the foregoing calculation method.

The control unit 16 then determines whether or not there are operation-free screens displayed outside a given range centered on the position of the base, on the basis of the given distance and initial layout information on the operation-free screen.

When there are no operation-free screens outside the range, the control unit 16 displays an operation-free screen on the display section 11 in accordance with initial layout information.

In the meantime, when there is an operation-free screen outside the range, the control unit 16 displays the operation-free screen so as to be included in the given range centered on the position of the base; for instance, displays a TV broadcast screen at the position of the base of the finger so as to appear along an edge proximate to the display section. A necessity for performing operation by much bending the finger used for operating the touch pad 12 becomes thereby obviated, so that operation can comfortably be performed.

It is also possible to dare to compel the device user to perform operation in an uncomfortable position by displaying display targets, which would otherwise yield disadvantages for the device user if the user makes an operation error, in the vicinity of the base of the finger, thereby preventing occurrence of an operation error (e.g., operation for deleting data, operation for effecting entry of personal information, and operation for aborting processing being performed).

Specifically, the execution program storage section 14 in the portable terminal device of the first example stores programs of various functions (a telephone directory, a camera, music, a mail, and the like).
In relation to operation, erroneous performance of which is desired to be avoided, such as operation for deleting data pertaining to various functions, operation for aborting performance of a function, and the like, (hereinafter called "error prevention target"), there are stored initial layout information (e.g., the 20th pixel in the direction of the X axis and the 100th pixel in the direction of the Y axis achieved while the upper left corner of the display section 11 is taken as a reference) and an image size that are used for providing a display on the display section 11 when the touch pad is not operated during performance of respective functions.

When the touch pad 12 is operated while the display section 11 is displaying various functions, the control unit 16 ascertains the position of the base of the finger of the device user by use of the foregoing calculation method.
The control unit 16 then determines whether or not there are error prevention targets displayed outside a given range centered on the position of the base, on the basis of the given distance and initial layout information on a target of error prevention.

When there are no error prevention targets outside the range, the control unit 16 displays the operation-free screen on the display section 11 in accordance with initial layout information.
In the meantime, when an error prevention target is outside the range, the control unit 16 displays the target so as to be included in the given range centered on the position of the base; for instance, displays an abort icon at the position of the base of the finger so as to appear along an edge proximate to the display section. This makes it difficult to perform operation unless otherwise the user will intentionally perform touching action by much bending a finger to be used for operation the touch pad 12, which in turn can diminish the potential risk of performance of erroneous operation.

### Second Example

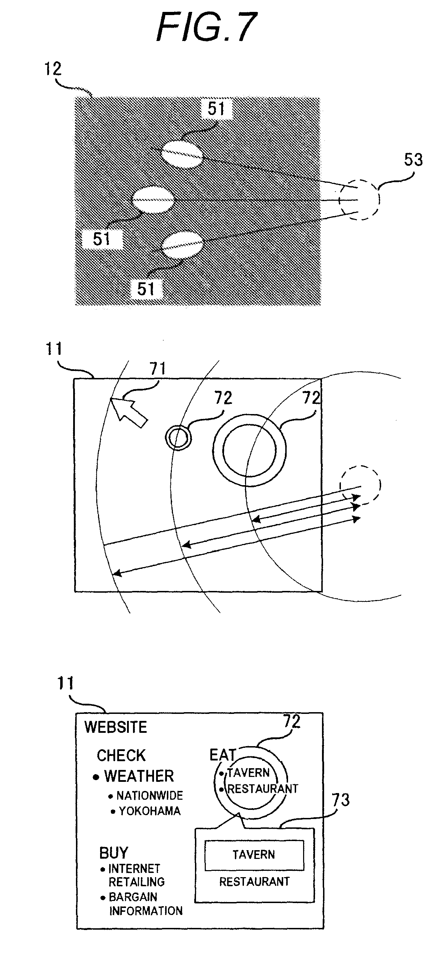

The first example is directed toward enhancing operability of the touch pad by preventing displaying of an operation target at a display position on the display section corresponding to the localized position 53 of the base of the finger. In a second example, there is described a configuration for enhancing operability of a touch pad while an operation target is displayed at a display position in the display section corresponding to the localized position 53 of the base of the finger. Fig. 7 shows a relationship between an exemplary display on the portable terminal device of the second example of the present invention and a position of the base achieved during the display.

A pointer for designating a target displayed on the display includes a pointer (hereinafter referred to as a "position designation pointer") for designating a target including coordinates of a certain position (a point) and a pointer (hereinafter referred to as a "range designation pointer") for designating a target that includes a portion of an aggregate (range) of coordinates of a certain position. In the second example, switching between the position designation pointer 71 (for designating a target including coordinates of a position on a leading end of an arrow) and the range designation pointer 72 (for designating a target including a portion of coordinates of a position enclosed by a circle) and switching of a range of the range designation of pointer are displayed in accordance with a distance from the localized position 53 of the base of the finger, as shown in a middle row of Fig. 7. Specifically, the control unit 16 executes a pointer display program stored in the execution program storage section 14, thereby subjecting a distance between the coordinates of the position input from the touch pad 12 to the localized position 53 of the base of the finger to a comparison. When the distance is longer than a certain threshold value, the control unit 16 causes the display section 11 to display the position designation pointer 71 whose arrowy leading end coincides with the coordinates of the position input from the touch pad 12. On the contrary, when the distance is shorter than the certain threshold value, the control unit 16 causes the display section 11 to display the range designation pointer 72 whose radius centered at the coordinates of the position input from the touch pad 12 becomes longer as the distance becomes shorter.

A lower row of Fig. 7 shows an exemplary display achieved when the range designation pointer 72 has designated a plurality of targets (a "tavern" and a "restaurant"). After the range designation pointer 72 has designated a plurality of targets, the control unit 16 causes another window 73 to display the targets (the "tavern" and the "restaurant"). Upon acceptance of a key input performed by way of the operation keys 13, the control unit selects a target responsive to the key input. When not accepted the key input performed by way of the operation keys 13, the range designation pointer 72 again designates a target, and the target is displayed on another window 73.

According to the distance between the coordinates of the position input by way of the touch pad 12 and the localized position 53 of the base of the finger, switching between the position designation pointer 71 and the range designation pointer 72 and switching of the range of the range designation pointer is displayed. When the leading end of the finger is brought into contact with a location close to the base of the finger, a range pointed by the pointer is enlarged, thereby providing an operation environment in which a target appearing on the display section is easy to designate.

The portable terminal device equipped with the touch pad has been described in connection with the embodiment of the present invention. Similar advantages; however, can also be yielded by the portable terminal device of the touch panel.

### Industrial Applicability

The portable terminal device and the display control method of the present invention yield advantages of the capability to hold the portable terminal device by one hand and enhance operability when a touch panel or a touch pad is operated by the hand; and are useful in a field of a portable terminal device having a touch panel or a touch pad.

## Claims

1. A portable terminal device comprising:
a display section for displaying various information thereon;
a press detection section that is adapted to detect a press; and
a control unit that is adapted to control a display position of a display target whose display position on the display section is previously stationarily set, according to a pressed area where the press detection section has detected the press.

2. The portable terminal device according to claim 1, wherein the control unit comprises:
a straight line calculation section that is adapted to calculate a straight line that passes through at least one point in the pressed area where the press detection section has detected the press and that has an inclination along a longitudinal direction of the pressed area;
a position calculation section that is adapted to calculate an average position of intersections when intersections of a plurality of straight lines calculated for the respective pressed areas by the straight line calculation section fall within a predetermined range; and
a display control unit that is adapted to control the display position of the display target according to the average position.

3. The portable terminal device according to claim 2, wherein the straight line calculation section calculates a major axis of the pressed area analogous to an ellipse as the straight line.

4. The portable terminal device according to claim 3, wherein the display control unit controls a display position of an image serving as the display target to be displayed on the display section, according to the average position.

5. The portable terminal device according to claim 3, wherein the display control unit controls a range pointed by a pointer displayed on the display section according to the average position.

6. A display control method comprising:
detecting a pressed area;
controlling a display position of a display target whose display position is previously stationarily set, according to the pressed area where a press is detected; and
displaying the display target whose display position is controlled.

## Amended claims

### Amended claims under Art. 19.1 PCT

1. (Amended)
A portable terminal device comprising:
a display section for displaying various information thereon;
a press detection section that is adapted to detect a press; and
a control unit that is adapted to control a display position of a display target whose display position on the display section is previously stationarily set, according to a pressed area where the press detection section has detected the press,
wherein the control unit comprises:
a straight line calculation section that is adapted to calculate a straight line that passes through at least one point in the pressed area where the press detection section has detected the press and that has an inclination along a longitudinal direction of the pressed area;
a display control unit that is adapted to control the display position of the display target according to intersections at which a plurality of straight lines calculated for the respective pressed areas by the straight line calculation section intersect.

2. (Amended)
The portable terminal device according to claim 1, wherein the straight line calculation section calculates a major axis of the pressed area analogous to an ellipse as the straight line.

3. (Amended)
The portable terminal device according to claim 2, wherein the control unit comprises a position calculation section that is adapted to calculate an average position of intersections when the intersections fall within a predetermined range, and
the display control unit controls a display position of an image serving as the display target to be displayed on the display section, according to the average position.

4. (Amended)
The portable terminal device according to claim 2, wherein the control
unit comprises a position calculation section that is adapted to calculate an average position of intersections when the intersections fall within a predetermined range, and
the display control unit controls a range pointed by a pointer displayed on the display section according to the average position.

5. (Amended)
A display control method comprising:
detecting a pressed area;
controlling a display position of a display target whose display position is previously stationarily set, according to the pressed area where a press is detected;
displaying the display target whose display position is controlled;
calculating a straight line that passes through at least one point in the pressed area where the press has been detected and that has an inclination along a longitudinal direction of the pressed area;
controlling the display position of the display target according to intersections at which a plurality of straight lines calculated for the respective pressed areas intersect.

6. (Cancelled)
